# EUROPÄISCHE PATENTSCHRIFT

(11) **EP 2 995 596 B1**
(45) Veröffentlichungstag und Bekanntmachung des Hinweises auf die Patenterteilung: **15.03.2017**
(21) Anmeldenummer: 14184346.6
(22) Anmeldetag: 11.09.2014
(51) Int. Cl.: C04B 35/622, C04B 35/63, C04B 28/34, C04B 111/28, C04B 35/047

(54) **Verwendung eines Versatzes zur Herstellung eines feuerfesten keramischen Erzeugnisses**
Use of a refractory mix for the manufacture of a refractory ceramic product
l'utilisation d'un mélange réfractaire pour la production d'un produit céramique réfractaire

(43) Veröffentlichungstag der Anmeldung: 16.03.2016
(73) Patentinhaber: Refractory Intellectual Property GmbH & Co. KG, 1100 Wien (AT)
(72) Erfinder: Cepak, Alexander, 1150 Wien (AT); Kappel, Manfred, 8700 Leoben (AT); Zettl, Karl-Michael, 1100 Wien (AT)
(74) Vertreter: Berkenbrink, Kai-Oliver

(56) Entgegenhaltungen:
- EP-A2- 0 146 457
- DATABASE WPI Week 200021 Thomson Scientific, London, GB; AN 2000-240171 XP002732726, -& JP 2000 044329 A (YOTAI KK) 15. Februar 2000 (2000-02-15)
- DATABASE WPI Week 201054 Thomson Scientific, London, GB; AN 2010-K01853 XP002732725, -& CN 101 768 001 A (MA'ANSHAN IRON & STEEL CO LTD) 7. Juli 2010 (2010-07-07)
- DATABASE WPI Week 201167 Thomson Scientific, London, GB; AN 2011-M48208 XP002732727, -& CN 102 173 840 A (YINGKOU BAYUQUAN REFRACTORIES CO LTD) 7. September 2011 (2011-09-07)
- DATABASE WPI Week 200731 Thomson Scientific, London, GB; AN 2007-310415 XP002732728, -& CN 1 844 052 A (ANSHAN YUNLU REFRACTORY MATERIALS FACTOR) 11. Oktober 2006 (2006-10-11)

## Beschreibung

Die Erfindung betrifft die Verwendung eines Versatzes als Spritzmasse zur Herstellung eines feuerfesten keramischen Erzeugnisses.

Ein Versatz bezeichnet bekanntermaßen eine Zusammensetzung aus einer oder mehreren Komponenten, durch die mittels eines keramischen Brandes ein feuerfestes keramisches Erzeugnis herstellbar ist.

Der Begriff "feuerfestes keramisches Erzeugnis" im Sinne der Erfindung bezeichnet insbesondere keramische Erzeugnisse mit einer Einsatztemperatur von über 600°C und bevorzugt feuerfeste Werkstoffe gemäß DIN 51060, also Werkstoffe mit einem Kegelfallpunkt > SK 17. Die Ermittlung des Kegelfallpunktes kann insbesondere gemäß DIN EN 993-12 erfolgen.

Feuerfeste keramische Erzeugnisse sind in Form ungeformter oder geformter feuerfester Erzeugnisse bekannt.

Geformte feuerfeste keramische Erzeugnisse können Steine oder Funktionalprodukte sein.

JP 2000044329 A, CN 101768001 A und CN 102173840 A offenbaren geformte feuerfeste Erzeugnisse in Form von Steinen auf Basis Magnesia. Dem in JP 2000044329 A offenbarten Stein liegt ein Versatz zugrunde, der Schmelzmagnesia und Seewassermagnesia sowie natürlichen Magnesiaklinker und Chromoxid umfassen kann. Ferner liegt dem in CN 101768001 A offenbarten Stein ein Versatz aus Schmelzmagnesia, Chromoxidpulver und Harz oder Polyvinylalkohol und dem in CN 102173840 A offenbarten Stein ein Versatz aus Schmelzmagnesia Graphit, Aluminiumpulver, Siliziumcarbidpulver und Chromoxid, jeweils mit einem Binder, zugrunde.

Ungeformte feuerfeste keramische Erzeugnisse werden auch als sogenannte "feuerfeste Massen" bezeichnet. Ungeformte feuerfeste keramische Erzeugnisse beziehungsweise feuerfeste Massen werden insbesondere auch als Gieß-, Pump- und Stampfmassen verwendet. Eine weitere Verwendung einer feuerfesten Masse ist deren Verwendung als Spritzmasse, die zur Reparatur hoch beanspruchter Ofenbereiche dient.

Die Anforderungen, die an feuerfeste keramische Erzeugnisse hinsichtlich ihrer feuerfesten Eigenschaften gestellt werden, sind hoch. So müssen diese beispielsweise gute feuerfeste Heißeigenschaften, beispielsweise eine möglichst hohe Festigkeit aufweisen.

Spritz- und Gießmassen sind aus dem Stand der Technik insbesondere auch in Form von basischen Spritzmassen bekannt. Diese basischen Spritz- und Gießmassen bestehen in der Regel aus einer Grundkomponente in Form von Sintermagnesia und weiteren feuerfesten Zusätzen, beispielsweise in Form eines Chromoxidwerkstoffes. Nach Aufbringen einer solchen Spritz- oder Gießmasse auf eine Oberfläche wird die Masse bei der Anwendung des Produktes, auf dessen Oberfläche die Masse aufgebracht ist, mit einer solchen Temperatur beaufschlagt, dass die Masse zu einem feuerfesten keramischen Erzeugnis sintert. Die Sinterfreudigkeit einer auf Sintermagnesia basierenden Spritz- oder Gießmasse kann dabei durch eine weitere Komponente in Form des besagten Chromoxidrohstoffes erhöht werden. Insoweit kann der Chromoxidrohstoff insbesondere eine Bindematrix ausbilden, über die die Körner aus Sintermagnesia miteinander versintert sind.

Grundsätzlich haben sich entsprechend ausgebildete Spritz- und Gießmassen auf Basis von Sintermagnesia mit Zusätzen eines Chromoxidrohstoffes zur Herstellung von ungeformten feuerfesten keramischen Erzeugnissen bewährt.

Allerdings wären für zahlreiche Anwendungen verbesserte feuerfeste Heißigenschaften wünschenswert, insbesondere beispielsweise verbesserte Druckfestigkeiten der aus der Masse hergestellten feuerfesten keramischen Erzeugnisse.

Der Erfindung liegt die Aufgabe zugrunde, die Verwendung eines Versatzes als Spritzmasse zur Herstellung eines feuerfesten keramischen Erzeugnisses zur Verfügung zu stellen, wodurch ein feuerfestes keramisches Erzeugnis mit verbesserten feuerfesten Heißeigenschaften gegenüber solchen Erzeugnissen herstellbar ist, die aus dem Stand der Technik bekannt sind.

Zur Lösung der Aufgabe wird erfindungsgemäß zur Verfügung gestellt eine Verwendung nach Anspruch 1.

Überraschend wurde im Rahmen der Erfindung festgestellt, dass auf Basis eines gemäß Anspruch 1 ausgebildeten Versatzes ein ungeformtes feuerfestes keramisches Erzeugnis, also eine feuerfeste Masse, herstellbar ist, das gegenüber den aus dem Stand der Technik bekannten Erzeugnissen deutlich verbesserte Heißeigenschaften aufweist.

Der Versatz gemäß der erfindungsgemäßen Verwendung zeichnet sich gegenüber den aus dem Stand der Technik bekannten, gattungsgemäßen Versätzen zum einen insbesondere dadurch aus, dass dieser als Grundkomponente ausschließlich oder vorwiegend Schmelzmagnesia im Gegensatz zur der aus dem Stand der Technik für solche Versätze regelmäßig verwendeten Grundkomponente in Form von Sintermagnesia aufweist. Ferner zeichnet sich der Versatz durch sehr spezifische Massenanteile an Schmelz- und Sintermagnesia und einer Chromoxidkomponente aus. Ferner zeichnet sich der Versatz insbesondere jedoch auch dadurch aus, dass bei diesem die Chromoxidkomponente in einer sehr feinen, spezifischen Korngröße von überwiegend höchstens 50 µm vorliegt. Insoweit liegt die Chromoxidkomponente des Versatzes in einer wesentlich geringeren Korngröße als die Chromoxidkomponenten von gattungsgemäßen Versätzen nach dem Stand der Technik vor. Insoweit liegt die Chromoxidkomponente in gattungsgemäßen Versätzen nach dem Stand der Technik überwiegend in einer Korngröße über 100 µm, insbesondere regelmäßig überwiegend in einer Korngröße im Bereich von 100 µm bis 1.000 µm vor.

Überraschend wurde erfindungsgemäß jedoch festgestellt, dass die feuerfesten Eigenschaften eines aus einem gattungsgemäßen Versatz hergestellten feuerfesten keramischen Erzeugnisses signifikant verbessert werden können, soweit die Chromoxidkomponente in der erfindungsgemäß geringen Korngröße vorliegt. Insbesondere wurde festgestellt, dass sich die Werte eines feuerfesten keramischen Erzeugnisses hinsichtlich seiner Heißeigenschafen, insbesondere auch hinsichtlich seiner Heißbiegefestigkeit, seiner linearen Längenänderung sowie seiner Kaltdruckfestigkeit signifikant verbessern, soweit die Chromoxidkomponente der Masse in der erfindungsgemäßen, geringen Korngröße vorliegt. Diese feuerfesten Eigenschaften eines aus dem Versatz hergestellten feuerfesten keramischen Erzeugnisses lassen sich weiter verbessern, soweit wenigstens 90 Masse-% der Chromoxidkomponente des erfindungsgemäßen Versatzes in einer Korngröße von 1 bis 50 µm, von 2 bis 50 µm, von 3 bis 50 µm, von 4 bis 50 µm oder von 5 bis 50 µm vorliegen, jeweils bezogen auf die Gesamtmasse der Chromoxidkomponente.

Die Erfinder nehmen an, dass diese vorteilhafte Wirkung der geringen Korngröße der Chromoxidkomponente darauf zurückzuführen ist, dass diese besonders intensiv mit der Grundkomponente in Form von Schmelzmagnesia reagiert und dabei im Kontaktbereich zwischen Schmelzmagnesia und Chromoxidkomponente MgO-Cr₂O₃-Spinell (Picrochromit) ausbildet, wodurch ein besonders festes Sintergefüge des keramischen Erzeugnisses ausgebildet wird.

Ferner wurde erfindungsgemäß festgestellt, dass sich die verbesserten feuerfesten Eigenschaften eines aus dem Versatz hergestellten feuerfesten keramischen Erzeugnisses insbesondere allein dann einstellen, soweit die Grundkomponente vorwiegend oder ausschließlich in Form von Schmelzmagnesia und nur in einem geringen Teil oder ohne Anteile an Sintermagnesia vorliegt. Durch die erfindungsgemäße Verwendung einer Grundkomponente vorwiegend oder ausschließlich in Form von Schmelzmagnesia zeichnet sich ein aus dem Versatz hergestelltes feuerfestes keramisches Erzeugnis durch eine besonders gute Korrosions- und Erosionsfestigkeit aus.

Erfindungsgemäß wurde festegestellt, dass es beim keramischen Brand des Versatzes zu Bildung von Magnesia-Chromit-Spinellen kommt, die die Heißeigenschaften eines aus dem Versatz hergestellten Erzeugnisses sehr vorteilhaft beeinflussen. Das Gefüge des feuerfesten Erzeugnisses wird durch die

Magnesia-Chromit-Spinelle verstärkt, wodurch die Magnesia-Körner besonders fest in das Gefüge eingebunden sind.

Insbesondere die Korrosions- und Erosionsfestigkeit eines aus dem Versatz hergestellten feuerfesten keramischen Erzeugnisses lässt sich weiter dadurch verbessern, dass die Schmelzmagnesia in dem Versatz in einem Anteil von wenigstens 60 Masse-% vorliegt, insbesondere beispielsweise auch in einem Anteil von wenigstens 65, 70, 75, 80, 85, 90, 91, 92, 93, 94, 95, 95,5 oder 96 Masse-%, wobei sich der Höchstanteil der Chromoxidkomponente im Falle der beiden letztgenannten Anteile im Versatz entsprechend auf höchstens 4,5 beziehungsweise 4 Masse-% reduziert.

Ferner wurde erfindungsgemäß festgestellt, dass sich die feuerfesten Eigenschaften des aus dem Versatz hergestellten feuerfesten keramischen Erzeugnisses insbesondere hinsichtlich seiner Festigkeit weiter dadurch steigern lassen, dass der Anteil der Chromoxidkomponente im Versatz auf Anteile von wenigstens 0,8 oder 1,0 Masse-% erhöht wird, wobei sich die Höchstanteile der Schmelzmagnesia im Versatz entsprechend auf maximal 99,2 beziehungsweise 99,0 Masse-% verringern.

Der Anteil der Sintermagnesia an der Grundkomponenten kann 0 Masse% betragen, maximal jedoch 50 Masse-%, also beispielsweise auch maximal 40, 35, 30, 25, 20, 15, 10, 9, 8, 7, 6, 5, 4, 3, 2 oder 1 Masse-%.

Alle hierin gemachten Angaben in Masse-% beziehen sich auf die Gesamtmasse des Versatzes beziehungsweise des Erzeugnisses, soweit hierin im Einzelfall nichts anderes angegeben ist.

Die Schmelzmagnesia im Versatz kann grundsätzlich in Form einer beliebigen Schmelzmagnesia vorliegen, bevorzugt in einer hochreinen Schmelzmagnesia, besonders bevorzugt mit einem Massenanteil an MgO von wenigstens 95, 96, 97, 98 oder 99 Masse-%, jeweils bezogen auf die Gesamtmasse der Schmelzmagnesia.

Bevorzugt wird eine Schmelzmagnesia mit einem möglichst geringen Anteil an CaO verwendet, bevorzugt mit einem Anteil an CaO unter 3 Masse-%, unter 2,5 Masse-%, unter 2 Masse-%, unter 1,5 Masse-%, unter 1 Masse-% oder unter 0,5 Masse-%, jeweils bezogen auf die Gesamtmasse der Schmelzmagnesia.

Bevorzugt kann die Schmelzmagnesia des Versatzes zu wenigstens 90 Masse-% in einer Korngröße von höchsten 5,0 mm vorliegen, bezogen auf die Gesamtmasse der Schmelzmagnesia.

Die Chromoxidkomponente liegt in dem Versatz besonders bevorzugt in Form wenigstens einer der folgenden Chromoxidrohstoffe vor: hochreiner synthetischer Chromoxidrohstoff oder Chromoxidrohstoff mit einem Anteil an Cr₂O₃ von wenigstens 90 Masse-%, letzteres bezogen auf den Chromoxidrohstoff.

Besonders bevorzugt ist die Chromoxidkomponente des Versatzes ausschließlich aus diesen Chromoxidrohstoffen ausgewählt.

Bei dem hochreinen synthetischen Chromoxidrohstoff kann es sich insbesondere um einen hochreinen technischen Chromoxidrohstoff, beispielsweise in Pigmentqualität handeln. Insbesondere kann es sich bei dem hochreinen synthetischen Chromoxidrohstoff um einen Eskolait-Werkstoff handeln. Solch hochreine synthetische Chromoxidrohstoffe können einen Anteil an Cr₂O₃ von über 90 Masse-% aufweisen, bezogen auf den Chromoxidrohstoff, also beispielsweise auch von über 92, 94, 96, 98 oder 99 Masse-% Cr₂O₃. Bevorzugt können auch die Chromoxidrohstoffe mit einem Anteil an Cr₂O₃ von wenigstens 90 Masse-% einen Anteil an Cr₂O₃ von wenigstens 92, 94, 96, 98 oder 99 Masse-% Cr₂O₃, jeweils bezogen auf den Chromoxidrohstoff, aufweisen.

Bevorzugt weist die Chromoxidkomponente einen Anteil an CaO unter 1,0 Masse-% auf, bezogen auf die Chromoxidkomponente, also beispielsweise auch unter 0,5 oder 0,1 Masse-% CaO.

Erfindungsgemäß wurde festgestellt, dass sich die feuerfesten Eigenschaften eines aus dem Versatz hergestellten feuerfesten keramischen Erzeugnisses erheblich verschlechtern können, soweit der Gesamtgehalt an CaO in dem erfindungsgemäßen Versatz bei wenigstens 2 Masse-% liegt. Insofern kann erfindungsgemäß vorgesehen sein, dass der Gehalt an CaO in dem Versatz unter 2,0 Masse-% liegt, bevorzugt beispielsweise auch unter 1,5 Masse-%, 1,0 Masse-%, 0,7 Masse-%, 0,5 Masse-% oder unter 0,3 Masse-%.

Da Gehalte an CaO insbesondere über Verunreinigungen in den Rohstoffen in den Versatz eingetragen werden, kann erfindungsgemäß bevorzugt vorgesehen sein, hochreine Magnesiarohstoff sowie eine hochreine Chromoxidkomponente zu verwenden.

Ferner ist bevorzugt vorgesehen, dass die folgenden Oxide, einzeln oder in Kombination, jeweils unterhalb der folgenden Massenanteile im Versatz vorliegen:
- Al₂O₃: unter 3, unter 2 oder unter 1 Masse-%;
- SiO₂: unter 3, unter 2 oder unter 1 Masse-%;
- Fe₂O₃: unter 3, unter 2 oder unter 1 Masse-%;
- TiO₂: unter 3, unter 2 oder unter 1 Masse-%.

Der Versatz umfasst, wie zuvor ausgeführt, bevorzugt reine bis hochreine Komponenten. Insoweit kann der Anteil an MgO im Versatz vollständig oder im Wesentlichen dem Anteil an Schmelzmagnesia und der Anteil an Cr₂O₃ im Versatz vollständig oder im Wesentlichen dem Anteil der Chromoxidkomponente entsprechen. Insoweit kann der Versatz beispielsweise bevorzugt die folgenden Anteile an MgO und Cr₂O₃, einzeln oder in Kombination, aufweisen:
- MgO: 95 bis 99,5 Masse-%, also beispielsweise auch wenigstens 95,5 Masse-% oder 96 Masse-% und beispielsweise höchstens auch 99,0 Masse-% oder 98,5 Masse-%;
- Cr₂O₃: 0,5 Masse-% bis 5 Masse-%, also beispielsweise auch wenigstens 1,0 Masse-% oder 1,5 Masse-% und beispielsweise höchstens 4,5 Masse-% oder 4,0 Masse-%.

Der Versatz kann als weitere Komponente wenigstens einen Plastifizierer aufweisen. Solche Plastifizierer, die auch als Elastifizierer bezeichnet werden, sind aus dem Stand der Technik bekannt und dienen dazu, die Gefügeelastizität des gebrannten feuerfesten keramischen Erzeugnisses zu erhöhen. Grundsätzlich können im Versatz beliebige der aus dem Stand der Technik bekannten Plastifizierer vorliegen, beispielsweise Spinell, Herzynit, Galaxit oder Jacobsit. Plastifizierer können beispielsweise in Anteilen im Bereich von 0,1 bis 0,5 Masse-% im Versatz vorliegen.

Erfindungsgemäß wird der Versatz als Spritzmasse verwendet, insbesondere auch gemäß den aus dem Stand der Technik bekannten Technologien. Insofern kann der Versatz beispielsweise mit anorganischen Bindern versehen werden, beispielsweise sulfatischen oder phosphatischen Bindern, beispielsweise wenigstens einem der folgenden Binder: Natriumhexamethaphosphat oder Natriumbisulfat. Beispielsweise kann der Versatz Binder in einem Anteil im Bereich von 0,5 bis 5 Masse-% aufweisen, bezogen auf 100 Masse-% des Versatzes ohne Binder.

Der, gegebenenfalls mit Bindern versehene Versatz, kann anschließend gemäß den aus dem Stand der Technik bekannten Technologie auf einen gewünschten Ort beziehungsweise eine gewünschte Oberfläche aufgebracht werden. Insoweit kann der Versatz als Spritzmasse beispielsweise mit Wasser angemacht und beispielsweise auf den Abstichringspalt bei einem Konverter für die Stahlproduktion aufgebracht werden.

Der keramische Brand der Spritzmasse erfolgt dadurch, dass die auf eine Oberfläche aufgebrachte Spritzmasse bei der Anwendung des Erzeugnisses, auf dessen Oberfläche die Spritzmasse aufgebracht ist, mit Temperatur beaufschlagt wird. Dabei sintert die Spritzmasse zu einem feuerfesten keramischen, also gesintertem Erzeugnis.

Der keramische Brand des Versatzes kann insbesondere bei einer Temperatur im Temperaturbereich von 1.300 bis 1.750 °C erfolgen, besonders bevorzugt bei wenigstens 1.350 oder 1.380 °C und bei höchstens 1.700, 1.650, 1.600, 1.550, 1.500, 1.450 oder 1.420 °C, da erfindungsgemäß festgestellt wurde, dass bei diesen Temperaturen in diesen Temperaturbereichen gebrannte Erzeugnisse besonders gute Heißeigenschaften aufweisen, beispielsweise auch besonders gute Werte für Heißbiegefestigkeit, Biegefestigkeit, Kaltdruckfestigkeit und bleibende Längenänderung.

Ein auf Grundlage der erfindungsgemäßen Verwendung hergestelltes feuerfestes keramisches Erzeugnis zeichnet sich, wie zuvor ausgeführt, durch hervorragende feuerfeste Heißeigenschaften aus. Insbesondere zeichnet sich ein solches Erzeugnis durch ein hervorragende Heißbiegefestigkeit, eine hervorragende lineare Längenänderung sowie eine hervorragende Kaltdruckfestigkeit aus.

So kann die Heißbiegefestigkeit des Erzeugnisses beispielsweise bei wenigstens 0,5 N/mm² liegen, also beispielsweise auch bei wenigstens 0,6 N/mm², 0,7 N/mm² oder 0,8 N/mm². Die Heißbiegefestigkeit ist bestimmt gemäß DIN EN 993-7: 1998 bei 1.400°C in oxidierender Atmosphäre.

Die Biegefestigkeit des Erzeugnisses kann beispielsweise wenigstens 5 oder 6 N/mm² betragen. Die Biegefestigkeit ist bestimmt gemäß DIN EN 993-11: 2007.

Die Kaltdruckfestigkeit des Erzeugnisses kann beispielsweise wenigstens 15 N/mm² betragen, also beispielsweise auch wenigstens 16, 18, 20 oder 22 N/mm². Die Kaltdruckfestigkeit ist bestimmt gemäß DIN EN 993-5: 1998.

Die bleibende Längenänderung des Erzeugnisses kann beispielsweise höchstens -0,15 Lin.-% betragen, also beispielsweise auch höchstens - 0,14 Lin.-%. Die bleibende Längenänderung ist bestimmt gemäß DIN 51045-5: 2007-01.

Gegenstand der Erfindung ist, wie hierin ausgeführt, die Verwendung des Versatzes als feuerfeste Spritzmasse.

Die Verwendung kann dabei mit der Maßgabe gemäß den erfindungsgemäß offenbarten Merkmalen erfolgen.

Weitere Merkmale der Erfindung ergeben sich aus den Ansprüchen sowie der nachfolgenden Beschreibung eines Ausführungsbeispieles der Erfindung.

Sämtliche der hierin offenbarten Merkmale der Erfindung können, einzeln oder in Kombination, beliebig miteinander kombiniert sein.

Ein Ausführungsbeispiel der Erfindung wird nachfolgend näher beschrieben. Das Ausführungsbeispiel betrifft einen Versatz, der gemäß dem beschriebenen Verfahren behandelt und als Spritzmasse verwendet wird.

Zunächst wurde ein Versatz erstellt, der zu 97,08 Masse-% Schmelzmagnesia und zu 2,92 Masse-% eine Chromoxidkomponente in Form eines hochreinen synthetischen Chromoxidrohstoffes in Form von Chromoxidgrün umfasste.

Die Schmelzmagnesia wurde in hochreiner Form mit einem Anteil an MgO von etwa 97,63 Masse-% eingesetzt, bezogen auf die Gesamtmasse an Schmelzmagnesia. Im Übrigen umfasste die Schmelzmagnesia Anteile an den folgenden Oxiden, jeweils bezogen auf die Gesamtmasse an Schmelzmagnesia: 0,08 Masse-% Al₂O₃; 0,26 Masse-% SiO₂; 0,19 Masse-% Fe₂O₃; 1,8 Masse-% CaO; 0,04 Masse-% B₂O₃.

Das verwendete Chromoxidgrün lag ebenfalls in hochreiner Form mit einem Anteil an Cr₂O₃ von etwa 99 Masse-% vor, bezogen auf die Gesamtmasse an Chromoxidgrün. Daneben lagen in Chromoxidgrün, jeweils bezogen auf die Gesamtmasse an Chromoxidgrün, die folgenden weiteren Oxide vor: 0,05 Masse-% Al₂O₃; 0,05 Masse-% SiO₂; 0,05 Masse-% Fe₂O₃; 0,2 Masse-% CaO; 0,05 Masse-% MgO; 0,1 Masse-% Zr02; 0,4 Masse-% TiO₂.

Der Versatz wurde anschließend mit Binder in Form von 1,92 Masse-% Natriumhexamethaphosphat sowie 0,38 Masse-% Natriumbisulfat, jeweils bezogen auf die Gesamtmasse des Versatzes ohne die Binder, gemischt, mit Wasser angemacht und in Form einer Spritzmasse auf die Oberfläche eines Abstichringspaltes eines Konverters aufgespritzt.

Bei der Anwendung des Konverters wurde die Spritzmasse mit einer Temperatur von 1.600°C beaufschlagt, wodurch die Spritzmasse einem keramischen Brand unterworfen wurde und die Spritzmasse zu einem feuerfesten keramischen Erzeugnis gesintert wurde.

Das erhaltene feuerfeste keramische Erzeugnis wies die folgenden physikalischen Eigenschaften auf, jeweils bestimmt gemäß den vorgenannten Normen:
Heißbiegefestigkeit: 0,9 N/mm²;
Biegefestigkeit: 7,0 N/mm²;
Kaltdruckfestigkeit: 24,0 N/mm²;
Bleibende Längenänderung: -0,13 Lin.-%.

## Patentansprüche

1. Verwendung eines Versatzes als Spritzmasse zur Herstellung eines feuerfesten keramischen Erzeugnisses, umfassend die folgenden Komponenten in den folgenden Massenanteilen, jeweils bezogen auf die Gesamtmasse des Erzeugnisses:
1.1 50 bis 99,5 Masse-% Schmelzmagnesia;
1.2 0 bis 50 Masse-% Sintermagnesia;
1.3 0,5 bis 5 Masse-% einer Chromoxidkomponente in Form wenigstens eines Rohstoffes auf Basis Cr₂O₃; wobei
1.4 wenigstens 90 Masse-% der Chromoxidkomponente in einer Korngröße von höchstens 50 µm vorliegt, bezogen auf die Gesamtmasse der Chromoxidkomponente;
mit folgenden Maßgaben:
Aufbringen des Versatzes auf eine Oberfläche eines Erzeugnisses;
Beaufschlagen des Erzeugnisses, auf dessen Oberfläche der Versatz aufgebracht ist, mit Temperatur derart, dass der Versatz zu einem feuerfesten keramischen Erzeugnis sintert.

2. Verwendung nach Anspruch 1, wobei im Versatz wenigstens 90 Masse-% der Schmelzmagnesia in einer Korngröße von maximal 5,0 mm vorliegen, bezogen auf die Gesamtmasse der Schmelzmagnesia.

3. Verwendung nach wenigstens einem der vorhergehenden Ansprüche mit einer Chromoxidkomponente im Versatz in Form wenigstens einer der folgenden Chromoxidrohstoffe: hochreiner synthetischer Chromoxidrohstoff oder Chromoxidrohstoff mit einem Anteil an Cr₂O₃ von wenigstens 90 Masse-%, bezogen auf den Chromoxidrohstoff.

## Claims

1. Use of a batch as a gunning mass for manufacturing a refractory ceramic product, comprising the following components in the following proportions by weight, respectively with respect to the total weight of the product:
1.1 50% to 99.5% by weight of fused magnesia;
1.2 0 to 50% by weight of sintered magnesia;
1.3 0.5% to 5% by weight of a chromium oxide component in the form of at least one raw material based on Cr₂O₃; wherein
1.4 at least 90% by weight of the chromium oxide component has a grain size of at most 50 µm, with respect to the total weight of the chromium oxide component;
with the following provisions:
applying the batch to a surface of a product;
treating the product to whose surface the batch is applied with temperature, such that the batch is sintered to form a refractory ceramic product.

2. Use according to claim 1, wherein in the batch at least 90% by weight of the fused magnesia with a maximum grain size of 5.0 mm, with respect to the total weight of the fused magnesia, are present.

3. Use according to at least one of the preceding claims, with a chromium oxide component in the batch in the form of at least one of the following chromium oxide raw materials: ultrapure synthetic chromium oxide raw material or chromium oxide raw material with a proportion of Cr₂O₃ of at least 90% by weight with respect to the chromium oxide raw material.

## Revendications

1. Utilisation d'une composition en tant que masse d'injection, destinée à fabriquer un produit céramique réfractaire, comprenant les composants suivants, dans les parts en masse suivantes, rapportées chacune à la masse totale du produit :
1.1 de 50 à 99,5 % en masse de magnésie fondue ;
1.2 de 0 à 50 % en masse de magnésie frittée ;
1.3 de 0,5 à 5 % en masse d'un composant en oxyde de chrome, sous la forme d'au moins une matière première sur base de Cr203 ;
1.4 au moins 90 % en masse du composant en oxyde de chrome, en rapport à la masse totale du composant en oxyde de chrome se présentant dans une grosseur de grains d'au plus 50 µm, ;
avec les critères suivants :
application de la composition sur une surface d'un produit ;
exposition du produit, sur la surface duquel est appliquée la composition à une température, de telle sorte que la composition fritte en un produit céramique réfractaire.

2. Utilisation selon la revendication 1, au moins 90 % en masse de la magnésie fondue, en rapport à la masse totale de magnésie fondue se présentant dans la composition avec une grosseur de grains d'un maximum de 5,0 mm,.

3. Utilisation selon au moins l'une quelconque des revendications précédentes, avec dans la composition, un composant en oxyde de chrome sous la forme d'au moins l'une des matières premières suivantes en oxyde de chrome matière première synthétique ultrapure en oxyde de chrome ou matière première en oxyde de chrome avec une part d'au moins 90 % en masse de Cr203, en rapport à la matière première en oxyde de chrome.
